# EUROPÄISCHE PATENTSCHRIFT

(11) **EP 2 526 007 B1**
(45) Veröffentlichungstag und Bekanntmachung des Hinweises auf die Patenterteilung: **29.07.2020**
(21) Anmeldenummer: 11709024.1
(22) Anmeldetag: 03.02.2011
(51) Int. Cl.: B62D 33/04

(54) **KRAFTFAHRZEUG MIT AUSKLEIDUNGSMODUL, AUSKLEIDUNGSMODUL UND VERBUNDGRUPPE**
VEHICLE WITH COVERING MODULE, COVERING MODULE AND ASSEMBLY SET
VEHICULE AVEC MODULE DE RECOUVREMENT, MODULE DE RECOUVREMENT ET ENSEMBLE DE LIAISON

(30) Priorität: 03.02.2010 DE 102010001540
(43) Veröffentlichungstag der Anmeldung: 28.11.2012
(73) Patentinhaber: Randt, Stephan, 86159 Augsburg (DE)
(72) Erfinder: Hurler, Walter, 86391 Stadtbergen (DE)
(74) Vertreter: Raunecker, Klaus Peter
(86) Internationale Anmeldenummer: PCT/EP2011/051569
(87) Internationale Veröffentlichungsnummer: WO 2011/095548

(56) Entgegenhaltungen:
- EP-A1- 0 458 113
- GB-A- 2 158 931
- US-A- 3 177 533
- US-A- 4 267 679
- US-A- 5 791 714
- US-A1- 2008 042 466

## Beschreibung

Die vorliegende Erfindung betrifft ein Kraftfahrzeug mit wenigstens einem Auskleidungsmodul, ein Auskleidungsmodul sowie eine Verbundgruppe mit wenigstens zwei Auskleidungsmodulen.

Aus der DE 39 06 628 C3 ist eine Bodenplattform für ein Chassis von Lastfahrzeugen, insbesondere Sattelaufliegern, für Container-Böden, Schiffsdecks und dergleichen bekannt, die ein Tragwerk und eine das Tragwerk wenigstens auf einer Flachseite abschließende Abdeckung umfasst. Zur Lösung der Aufgabe, eine Bodenplattform der vorgenannten Art anzugeben, die in ihrer Bauhöhe deutlich gegenüber dem üblichen Träger-Traversen-Holzbohlenaufbau verringert ist und damit einen höheren Nutzraum für das Fahrzeug ergibt, besteht das Tragwerk wenigstens teilweise aus einer Wabenstruktur, die aus sich untereinander kreuzenden Stegblechen und aus mit einem Teil der Kanten der Stegbleche verbundenen, die Wabenstruktur einschließenden und versteifenden Decktafeln besteht, wobei letztere wenigstens teilweise als Abdeckung dienen.

Die EP 1 445 178 A1 offenbart einen Boden für ein Fahrzeug zur Lastenbeförderung, wie zum Beispiel einen Lastkraftwagen, ein Industriefahrzeug und dergleichen, der einen plattenförmigen flachen Aufbau umfasst, der ausgelegt ist, auf Längselementen des Hauptrahmens des Fahrzeugs befestigt zu sein. Dabei umfasst der plattenförmige flache Aufbau einen Rahmen, der nach der Montage wenigstens einen Teil des Hauptrahmens bildet, und eine Platte, die mehrere Lagen umfasst, wobei eine Lage, die ein zellenförmiges Grundgefüge aufweist, zwischen einer Ober- und einer Bodenlage angeordnet ist. Beide weisen eine begrenzte Dicke auf verglichen mit jener der zellenförmigen Grundgefügelage. Quer verlaufende stabförmige Einsätze, die Teil des Rahmens sind und nach der Montage Querträger des Hauptrahmens bilden, sind in die Dicke der zellenförmigen Grundgefügelage eingebettet, woraus ein zusammengesetzter, strukturell einteiliger und selbsttragender Boden resultiert.

Ferner ist in der DE 10 2007 020 589 A1 ein Nutzfahrzeug mit einem Fahrzeugrahmen und einem Laderaum beschrieben, der einen Boden aufweist, wobei der Boden wenigstens ein Einlegebodenelement umfasst, das in einer Bodenaufnahme des Fahrzeugrahmens angeordnet ist. Das Einlegebodenelement weist wenigstens eine erste Schicht zur Bildung einer begehbaren Oberseite und eine zweite Schicht mit einer Wabenstruktur auf.

Die US 5 791 714 A offenbart eine Endeinheit zur Verwendung an Fahrzeugen mit modularen Böden, wie Lastwagenbetten, Anhängern und dergleichen. Die Endeinheit umfasst einen Lastaufnahmeabschnitt mit einer integrierten Verstärkungsrippe, die sich entlang der Kante des Lastaufnahmeabschnitts erstreckt, die den Lastaufnahmeabschnitt gegen Punktlasten und Aufpralllasten versteift.

Die US 4 267 679 A offenbart eine Isolierplattenwandkonstruktion, die mehrere hohle isolierte Konstruktionsplatten aufweist..

Aus der US 2008/042466 A1 ist eine Einheit zum Zurückbringen einer Abdeckung eines Anhängers bekannt.

Die GB 2 158 931 A beschreibt Seitenwände einer isolierten Fahrzeugkarosserie, die aus mehreren Paneelen besteht.

Die EP 0 458 113 A1 offenbart Karosseriebauteile, an denen separate Befestigungsmittel vorgesehen sind, um einen Beleuchtungsmast oder dergleichen sicher anzubringen.

Es ist die Aufgabe der vorliegenden Erfindung, ein Kraftfahrzeug mit wenigstens einem Auskleidungsmodul, ein Auskleidungsmodul sowie eine Verbundgruppe mit Auskleidungsmodulen zu schaffen, die sich gegenüber bekannten Kraftfahrzeugen, Auskleidungsmodulen und Verbundgruppen durch eine erhöhte Praktikabilität, Flexibilität und Beständigkeit auszeichnen.

Diese Aufgabe wird durch das Kraftfahrzeug mit den Merkmalen des Anspruchs 1, durch das Auskleidungsmodul mit den Merkmalen des Anspruchs 9 und durch die Verbundgruppe mit den Merkmalen des Anspruchs 10 gelöst. Bevorzugte Ausführungsformen sind Gegenstand der abhängigen Ansprüche.

Ein Kraftfahrzeug gemäß der vorliegenden Erfindung weist wenigstens ein Auskleidungsmodul auf, das wenigstens einen Teil eines Ladebereichs oder wenigstens einen Teil einer Wandfläche des Kraftfahrzeugs abdeckt und das wenigstens ein Grundelement, wenigstens zwei Seitenwände sowie wenigstens eine Deckplatte umfasst, wobei das Grundelement zum wenigstens teilweisen Anlegen des Auskleidungsmoduls an einer Unterlage vorgesehen ist, die Seitenwände wenigstens an zwei entgegengesetzten Endabschnitten des Grundelements mit diesem verbunden sind und die Deckplatte an dem Grundelement abgewandten Randabschnitten der Seitenwände gehalten ist, wobei Grundelement, Seitenwände und Deckplatte wenigstens einen Hohlraum umschließen. Entsprechend umfasst ein erfindungsgemäßes Auskleidungsmodul zum Abdecken wenigstens eines Teils eines Ladebereichs oder einer Wandfläche eines Kraftfahrzeugs wenigstens ein Grundelement das zum wenigstens teilweisen Anlegen des Auskleidungsmoduls an einer Unterlage vorgesehen ist, wenigstens zwei an entgegengesetzten Endabschnitten des Grundelements mit diesem verbundene Seitenwände sowie wenigstens eine Deckplatte, die an dem Grundelement abgewandten Randabschnitten der Seitenwände gehalten ist, wobei Grundelement, Seitenwände und Deckplatte wenigstens einen Hohlraum umschließen. Eine Verbundgruppe gemäß der vorliegenden Erfindung umfasst wenigstens zwei miteinander verbundene derartige Auskleidungsmodule.

Im Unterschied zu bekannten Kraftfahrzeugen, Auskleidungsmodulen und Verbundgruppen wird gemäß der vorliegenden Erfindung beim Auskleidungsmodul auf Tragwerke wie T-, Doppel-T-Träger, Traversen, Stegbleche beziehungsweise Wabenelemente verzichtet. Stattdessen weist das Auskleidungsmodul einen Hohlraum auf, der sich auf vielfältige Weise nutzen lässt. So können in demselben Leitungen, Aggregate und Steuergeräte wie in einem Installationskanal in von außen geschützter Position untergebracht werden, was bei bekannten Auskleidungsmodulen aufgrund der diversen Tragwerke nicht möglich ist. Im Innenraum des Auskleidungsmoduls ist dagegen eine saubere und geschützte Leitungsführung möglich. Darüber hinaus sind das Kraftfahrzeug, das Auskleidungsmodul und die Verbundgruppe gemäß der vorliegenden Erfindung gegenüber bekannten Kraftfahrzeugen, Auskleidungsmodulen und Verbundgruppen beständiger, da bei letzteren infolge der Tragwerke mannigfache Winkel, Ecken, Kanten und kleinere Räume auftreten, die sich als ausgesprochen korrosionsanfällig erweisen. Gemäß der vorliegenden Erfindung lassen sich Auskleidungsmodule ganz allgemein sowohl zum Aus- oder Verkleiden beziehungsweise Abdecken von Böden oder Lagerbereichen als auch zum Abdecken von insbesondere senkrechten Wänden verwenden. Bei der Unterlage kann es sich zum Beispiel je nach Einsatz des Auskleidungsmoduls entsprechend um eine Bodenfläche oder um einen Rahmen und insbesondere einen Fahrzeugrahmen, oder um eine Wandfläche oder einen oder mehrere Träger handeln. Sofern das Auskleidungsmodul zum Auskleiden eines Lagerbereichs vorgesehen und das Grundelement nach unten hin abgeschlossen ist, bzw. sofern das Grundelement wannenartig vertieft ist und/oder der Hohlraum an von dem Grundelement, den Seitenwänden und der Deckplatte nicht umschlossenen Seiten wenigstens teilweise geschlossen ist, können im Falle des Transports problematischer Transportgüter unbeabsichtigt freigesetzte Flüssigkeiten, Stäube oder andere Schüttgüter in dem Hohlraum aufgefangen werden, wodurch ein Eindringen derselben in das Erdreich verhindert wird. Um im Falle einer Verwendung des Auskleidungsmoduls zum Auskleiden einer Boden- oder Lagerfläche eine mechanische Stabilität desselben zu gewährleisten, sind die Abmessungen des Auskleidungsmoduls zwar abhängig von den zu seiner Herstellung verwendeten Materialien begrenzt, es können zum Auskleiden größerer Flächen jedoch mehrere der Auskleidungsmodule in beliebiger Orientierung zueinander nebeneinander positioniert werden. Folglich kann ein erfindungsgemäßes Kraftfahrzeug mehrere der Auskleidungsmodule mit Flächen, die im Vergleich zur Fläche des auszukleidenden Bereiches klein sind, aufweisen, anstatt wie bei bekannten Kraftfahrzeugen für Bodenflächen wenige großflächige Auskleidungsmodule oder gar nur ein Auskleidungsmodul mit Tragwerken vorzusehen. Dabei können die Auskleidungsmodule in den unterschiedlichsten Bauhöhen und Größen sowie aus unterschiedlichsten Materialien und mit unterschiedlichsten Festigkeiten sowohl maschinell als auch manuell hergestellt werden. Ferner können das Grundelement und/oder die Seitenwände ganz allgemein beliebig geformt sein. So kann wenigstens eine der Seitenwände beliebig gebogen sein. Bevorzugt sind die Seitenwände aber im Wesentlichen eben bzw. plattenartig ausgeführt.

Erfindungsgemäß sind das Grundelement und die Seitenwände als einstückiges Formprofil ausgebildet. Ein derartiges Formprofil zeichnet sich durch eine einfache und billige Herstellungsweise sowie durch eine besonders hohe Stabilität aus.

Grundsätzlich kann bei dem Auskleidungsmodul die Deckplatte an den Seitenwänden lösbar oder unlösbar gehalten sein. Beispielsweise kann die Deckplatte mit den Randabschnitten der Seitenwände verklebt, vernietet, vernagelt oder verschweißt sein. Eine lösbare Halterung kann mittels Verschraubungen, Verzapfungen, Klammern oder Rasteinrichtungen ausgeführt sein. Dabei können die Randabschnitte der Seitenwände abgewinkelt ausgeführt sein und als An- bzw. Auflagefläche für die Deckplatte dienen. Andererseits können die Randabschnitte nutartige Vertiefungen aufweisen, in welche die Deckplatte mit jeweiligen Randabschnitten einschiebbar ist, oder aber es können schienenartige Vorsprünge an den Randabschnitten der Seitenwände ausgebildet sein, auf die eine mit entsprechenden nutartigen Vertiefungen versehene Deckplatte aufschiebbar ist. Lösbar gehaltene Deckplatten lassen sich vorteilhafterweise schnell und bequem austauschen, ohne dazu das komplette Auskleidungsmodul austauschen zu müssen. So kann beispielsweise bei einem zur Auskleidung eines Lagerbereichs eingesetzten Auskleidungsmodul die Deckplatte auf einfache Weise durch eine lebensmittelechte Deckplatte ausgetauscht werden, sofern der Lagerbereich auf das Lagern von Lebensmitteln umgestellt werden soll. Auf diese Weise lässt sich das Auskleidungsmodul auf vielfältigste Anforderungen, die an die Beschaffenheit der mit Lagergut in Berührung kommenden Materialien gestellt werden, problemlos anpassen.

Die Deckplatte kann je nach den Anforderungen beliebig beschaffen sein. Bevorzugt ist oder umfasst die Deckplatte wenigstens eine Holzplatte und/oder wenigstens eine Siebdruckplatte und/oder wenigstens eine Metallplatte und/oder wenigstens eine Edelstahlplatte und/oder wenigstens eine Aluminiumplatte und/oder wenigstens eine Riffelplatte und/oder wenigstens ein Tränenblech. Ferner kann die Deckplatte wenigstens eine Ausnehmung aufweisen.

Besonders bevorzugt weist das Auskleidungsmodul wenigstens eine Verbindungseinrichtung zum lösbaren oder unlösbaren Verbinden des Auskleidungsmoduls mit einem benachbarten Auskleidungsmodul oder einem benachbarten Teil eines Auskleidungsmoduls auf. Dabei können das Grundelement und/oder die Deckplatte und/oder wenigstens eine der Seitenwände die Verbindungseinrichtung wenigstens teilweise oder ganz umfassen. Mit entsprechenden Verbindungseinrichtungen lassen sich benachbarte Auskleidungsmodule oder Teile von Auskleidungsmodulen miteinander verkleben, vernieten, verschweißen, verschrauben, vernageln, verklammern, verzapfen oder verrasten, um die Auskleidungsmodule beispielsweise vor einem gegenseitigen Verschieben zu sichern. Auch können Auskleidungsmodule per Stoß, geklinkert oder durch Überlappung, auch durch Stürzen, zu Einheiten oder Verbundgruppen zusammengefügt werden. Insbesondere lassen sich die Auskleidungsmodule stapelbar ausbilden, indem Unterseiten und Oberseiten einzelner Auskleidungsmodule ineinander einpassbar ausgeformt werden. Derartige Auskleidungsmodule können zum Beispiel zum Höhenausgleich übereinander gestapelt werden, was insbesondere bei Kraftfahrzeugen mit Sattelauflegern vorteilhaft ist. Ferner lassen sich durch Übereinanderstapeln der Auskleidungsmodule mehrere Ebenen derselben ausbilden, bzw. bei entsprechender Anordnung von Auskleidungsmodulen mit durchgängigen und beidseitig offenen Hohlräumen mehrere Ebenen von Schächten.

Bei einem Auskleidungsmodul können die Seitenwände in einer Längsrichtung des Auskleidungsmoduls unterschiedlich oder gleich lang sein. Unterschiedlich lange Seitenwände sind zum Beispiel dann bevorzugt, wenn zwei zueinander rechtwinklig orientierte Auskleidungsmodule aneinandergefügt werden, von denen eines unterschiedlich lange Seitenwände umfasst und das jeweils andere Auskleidungsmodul in eine von der kürzeren Seitenwand freigegebene Ausnehmung des ersten Auskleidungsmoduls eingreift.

Eine Ausführungsform der vorliegenden Erfindung weist ein Auskleidungsmodul auf, das ein Isoliermaterial umfasst oder mit einem Isoliermaterial ausgekleidet ist. Derartige Auskleidungsmodule werden bevorzugt zum Auskleiden wenigstens eines Teils einer Wand eingesetzt.

Ganz allgemein kann sich der Hohlraum in einer Längsrichtung des Auskleidungsmoduls frei durchgängig erstrecken und beidseitig offen sein und/oder es kann wenigstens ein Funktionselement im Hohlraum angeordnet sein. Das Funktionselement kann beliebig sein. Beispielsweise kann es sich bei dem Funktionselement um eine Halte- oder Klemmeinrichtung zum Fixieren von durch den Hohlraum geführten Kabeln oder Kabelbäumen handeln, oder um eine Quer- oder Stirnwand, die beliebig viele Öffnungen aufweisen kann. Im Falle größerer Belastungen des Auskleidungsmoduls kann es sich bei dem Funktionselement auch um ein zur mechanischen Verstärkung des Auskleidungsmoduls an einer entsprechenden Stelle vorgesehenes, beispielsweise in das Auskleidungsmodul eingeschweißtes, Stegblech handeln.

Die Seitenwände des Auskleidungsmoduls können zueinander parallel ausgerichtet sein oder sie können einen Winkel bilden. So kann wenigstens eine der Seitenwände mit dem Grundelement und/oder mit der Deckplatte einen rechten Winkel oder einen Winkel bilden, der kleiner oder größer ist als 90°. Derartig ausgeführte Auskleidungsmodule können beispielsweise zur besseren Raumnutzung in Ausnehmungen von Begrenzungselementen eines auszukleidenden Bereiches eingreifen. Ferner können die Seitenwände in einer Längsrichtung des Auskleidungsmoduls keilförmig aufeinander zulaufen, um auch Flächen mit sich ändernden Abmessungen mit Auskleidungsmodulen möglichst vollständig auszukleiden.

Bevorzugte Ausführungsformen der Erfindung werden nachfolgend anhand von Figuren näher erläutert. Es zeigen:
- Figur 1a): Querschnitte durch mehrere unterschiedliche Auskleidungsmodule;
- Figur 1b): eine Draufsicht auf ein Auskleidungsmodul;
- Figur 2: eine Verbundgruppe;
- Figur 3: zwei miteinander verbundene Auskleidungsmodule;
- Figur 4: einen Lastkraftwagen, dessen Ladebereich mit Auskleidungsmodulen ausgekleidet ist;
- Figur 5: einen weiteren Lastkraftwagen, dessen Ladebereich mit Auskleidungsmodulen ausgekleidet ist;
- Figur 6: einen weiteren Lastkraftwagen, dessen Ladebereich mit Auskleidungsmodulen ausgekleidet ist;
- Figur 7: einen weiteren Lastkraftwagen, dessen Ladebereich mit Auskleidungsmodulen ausgekleidet ist;
- Figur 8: einen weiteren Lastkraftwagen, dessen Ladebereich mit Auskleidungsmodulen ausgekleidet ist;
- Figur 9: einen weiteren Lastkraftwagen, dessen Ladebereich mit Auskleidungsmodulen ausgekleidet ist; und
- Figur 10: einen weiteren Lastkraftwagen, dessen Ladebereich mit Auskleidungsmodulen ausgekleidet ist.

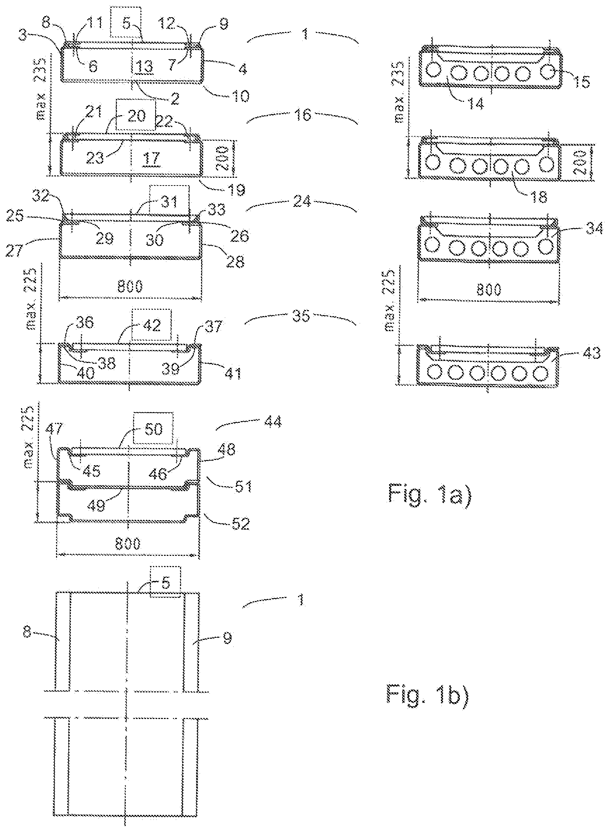

In der Figur 1a) sind verschiedene längliche Auskleidungsmodule zum Abdecken wenigstens eines Teils eines Ladebereichs oder einer Wandfläche eines Kraftfahrzeugs im Querschnitt dargestellt, während die Figur 1b) exemplarisch eine Draufsicht auf eines der in der Figur 1a) zu sehenden Auskleidungsmodule zeigt. Bemaßungen in der Figur 1a) sowie in allen folgenden Figuren sind jeweils in mm.

Ein in der Figur 1a) dargestelltes Auskleidungsmodul (1) weist ein plattenförmiges Grundelement (2), an jeweils entgegengesetzten Enden oder Randabschnitten des Grundelements (2) zwei zu diesem normale Seitenwände (3) und (4) sowie eine Deckplatte (5) auf. Ein dem Grundelement (2) abgewandter Randabschnitt (6) der Seitenwand (3) ist der Seitenwand (4) zugewandt im rechten Winkel von der Seitenwand (3) abgewinkelt und somit zum Grundelement (2) parallel ausgerichtet. Entsprechend ist ein dem Grundelement (2) abgewandter Randabschnitt (7) der Seitenwand (4) der Seitenwand (3) zugewandt im rechten Winkel von der Seitenwand (4) abgewinkelt und somit zum Grundelement (2) parallel ausgerichtet. An einer dem Grundelement (2) abgewandten Seite der Randabschnitte (6) und (7) sind jeweilige L-Profile (8) und (9) mit der jeweils kürzeren Seite derart an die Randabschnitte (6) und (7) aufgesetzt, dass die L-Profile (8) und (9) und die Randabschnitte (6) und (7) jeweilige mit den offenen Seiten einander zugewandte kanalförmige Nuten begrenzen. Grundplatte (2), Seitenwände (3) und (4) samt deren Randabschnitten (6) und (7) sowie die L-Profile (8) und (9) sind einstückig aus einem Formprofil hergestellt und bilden einen Unterbau (10) des Auskleidungsmoduls (1). Bei der Deckplatte (5) handelt es sich um eine Siebdruckplatte. An zwei entgegengesetzten Seiten weist die Deckplatte (5) jeweils einen länglichen Vorsprung (11) und (12) auf, der sich entlang der Seiten der Deckplatte (5) erstreckt und im Vergleich zur Dicke der Deckplatte (5) eine kleinere Dicke aufweist. Die Vorsprünge (11) und (12) sind dabei hinsichtlich der Dicke oder Höhe der Deckplatte (5) mittig angeordnet. Mit den Vorsprüngen (11) und (12) ist die Deckplatte (5) in jeweilige der von den Randabschnitten (6) und (7) und von den L-Profilen (8) und (9) gebildeten Nuten eingeschoben. Grundelement (2), Seitenwände (3) und (4) sowie die Deckplatte (5) umschließen oder begrenzen somit einen sich durch die gesamte Länge des Auskleidungsmoduls (1) erstreckenden Hohlraum (13).

Eine Draufsicht auf das Auskleidungsmodul (1) ist in der Figur 1b) zu sehen.

Beim Auskleidungsmodul (1) ist die Deckplatte (5) mit den Vorsprüngen (11) und (12) lediglich in die von den Randabschnitten (6) und (7) und von den L-Profilen (8) und (9) gebildeten Nuten eingeschoben und nicht mit dem Unterbau (10) des Auskleidungsmoduls (1) verbunden. Jedoch ist es auch möglich, die Deckplatte (5) mit dem Unterbau (10) bzw. mit den Seitenwänden (3) und (4) lösbar oder unlösbar zu verbinden. Beispielsweise können in gleichmäßigen Abständen im Randabschnitt (6), im L-Profil (8) und im Vorsprung (11) jeweils miteinander fluchtende Öffnungen vorgesehen sein, durch die Schrauben steckbar sind, um eine Schraubverbindung zwischen Deckplatte (5) und Seitenwand (3) zu ermöglichen. Entsprechende Öffnungen können im Randabschnitt (7), im Vorsprung (9) und im L-Profil (12) vorgesehen sein. Damit lässt sich die Deckplatte (5) einerseits mit dem Unterbau (10) verbinden. Andererseits kann die Deckplatte (5) einfach und schnell durch lösen der Schraubverbindung vom Unterbau (10) getrennt und entfernt oder ausgetauscht werden.

Der Hohlraum (13) wird erfindungsgemäß zur Aufnahme einer oder mehrerer Querwände (14) in den Hohlraum (13) verwendet. Entsprechend ist in der Figur 1a) das Auskleidungsmodul (1) einmal mit und einmal ohne eine derartige Querwand (14) zu sehen. Im vorliegenden Fall weist die Querwand (14) mehrere kreisförmige Öffnungen (15) auf, die zum Fixieren von Leitungen bzw. Kabelbäumen vorgesehen sind.

Vom Auskleidungsmodul (1) sind verschiedene Abwandlungen möglich.

So ist beim ebenfalls in der Figur 1a) zu sehenden Auskleidungsmodul (16), das einmal ohne und einmal mit einer in dessen Hohlraum (17) angeordneten Querwand (18) dargestellt ist, beispielsweise die Ausführung seines Unterbaus (19) mit demjenigen des Unterbaus (10) des Auskleidungsmoduls (1) identisch. Hingegen weist das Auskleidungsmodul (16) eine Deckplatte (20) mit seitlichen Vorsprüngen (21) und (22) auf, die mit einer Unterseite (23) der Deckplatte (20) fluchten.

Bei einem anderen aus gebogenem Blech hergestellten Auskleidungsmodul (24) sind jeweilige Randabschnitte (25) und (26) der Seitenwände (27) und (28) derart gebogen, dass sie Auflageflächen (29) und (30) mit jeweiligen seitlichen Anschlägen (32) und (33) für eine Deckplatte (31) bilden. Bei der Deckplatte (31) handelt es sich um eine einfache Platte ohne Vorsprünge, die mit entgegengesetzten Randabschnitten jeweils auf den Auflageflächen (29) und (30) aufliegt und mit entgegengesetzten Seiten jeweils an den Anschlägen (32) und (33) anschlägt. Auch das Auskleidungsmodul (24) ist einmal ohne und einmal mit einer Querwand (34) zu sehen.

Eine Abwandlung des Auskleidungsmoduls (24) stellt das Auskleidungsmodul (35) dar, bei dem Z-Profile (36) und (37) derart auf abgewinkelten Randabschnitten (38) und (39) der Seitenwände (40) und (41) angeschweißt sind, dass ähnlich dem Auskleidungsmodul (24) Auflagen für eine plattenförmige Deckplatte (42) vorliegen. Wie bei den vorherigen Beispielen ist auch das Auskleidungsmodul (35) einmal ohne und einmal mit einer Querwand (43) dargestellt.

Schließlich zeigt die Figur 1a) ein Auskleidungsmodul (44), bei dem abgewinkelte Randabschnitte (45) und (46) der Seitenwände (47) und (48) gestuft ausgebildet sind. Darüberhinaus ist dessen Grundelement (49) in der Mitte wannenartig vertieft. Auf den Randabschnitten (45) und (46) liegt eine Deckplatte (50) auf. Infolge der besonderen Ausbildung seines Unterbaus (51) kann das Auskleidungsmodul (44) auf den Unterbau (52) eines weiteren entsprechend ausgebildeten Auskleidungsmoduls aufgesetzt werden, sofern bei diesem weiteren Auskleidungsmodul die Deckplatte entfernt worden ist. Auf diese Weise kann eine beliebige Anzahl von Unterbauten derartiger Auskleidungsmodule gestapelt werden.

Wie bei dem Auskleidungsmodul (1) können auch bei allen anderen der gezeigten Auskleidungsmodule die jeweiligen Deckplatten mit den jeweiligen Unterbauten lösbar oder unlösbar verbunden sein.

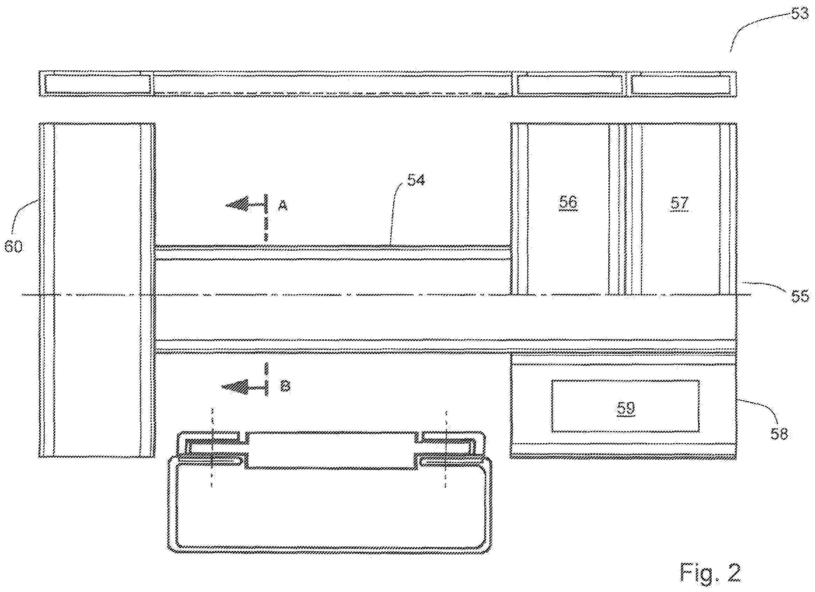

Figur 2 zeigt eine Verbundgruppe (53), die mehrere verschiedene miteinander verbundene Auskleidungsmodule umfasst. Die Verbundgruppe (53) ist dabei einmal in der Seitenansicht und einmal in der Draufsicht zu sehen. Ferner ist ein Querschnitt durch die Verbundgruppe (53) entlang einer Linie A-B dargestellt.

Die Verbundgruppe (53) ist zum Auskleiden des Bodens eines Ladebereichs eines Lastwagens vorgesehen, und wird daher auch Bodengruppe genannt. Sie besteht aus einem länglichen Auskleidungsmodul (54), dessen Querschnitt im Wesentlichen demjenigen des Auskleidungsmoduls (1) aus der Figur 1a) entspricht. Ein Endabschnitt des Auskleidungsmoduls (54) weist an einer Seite eine sich bis zur Mitte des Auskleidungsmoduls (54) erstreckende seitliche Ausnehmung (55) auf. In diese Ausnehmung (55) greifen zwei mit ihren Seitenwänden aneinander liegende und zum Auskleidungsmodul (54) rechtwinklig orientierte Auskleidungsmodule (56) und (57) teilweise ein. Auf Höhe der Ausnehmung (55) liegt ein zum Auskleidungsmodul (54) parallel orientiertes Auskleidungsmodul (58) auf einer der Ausnehmung (55) abgewandten Seite am Auskleidungsmodul (54) an. Das Auskleidungsmodul (58) weist in seiner Deckplatte eine Ausnehmung (59) auf, die für einen Radkasten des Lastwagens vorgesehen ist. Darüber hinaus liegt an einer dem Endabschnitt mit der Ausnehmung (55) entgegengesetzten Stirnseite des Auskleidungsmoduls (54) ein zu diesem rechtwinklig orientiertes Auskleidungsmodul (60) am Auskleidungsmodul (54) an, so dass die Auskleidungsmodule (54) und (60) im Wesentlichen eine T-Form bilden. Alle Auskleidungsmodule (54), (56), (57), (58) und (60) haben dieselbe Höhe, wobei deren jeweilige Oberseiten und deren jeweilige Unterseiten miteinander fluchten.

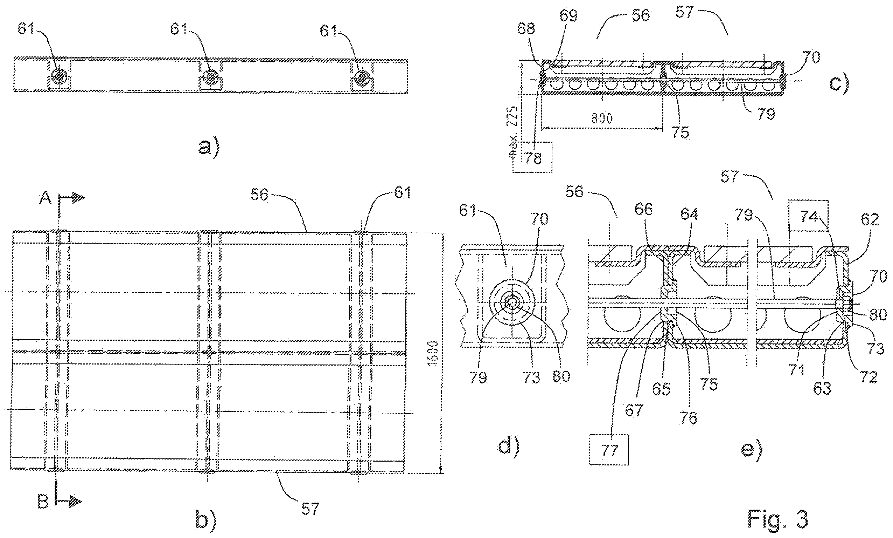

Die seitlich aneinander liegenden Auskleidungsmodule (56) und (57) sind in der Figur 3 detaillierter dargestellt. Dabei zeigt die Figur 3a) eine Seitenansicht der Auskleidungsmodule (56) und (57) und die Figur 3b) eine Draufsicht auf die Auskleidungsmodule (56) und (57). In den Figuren 3a) und 3b) sind Verbindungseinrichtungen (61) ersichtlich, mit denen die Auskleidungsmodule (56) und (57) lösbar miteinander verbunden sind. Figur 3c) zeigt einen Querschnitt durch die Auskleidungsmodule (56) und (57) entlang einer in der Figur 3b) eingezeichneten Linie A-B, die durch eine der Verbindungseinrichtungen (61) verläuft. Eine der Verbindungseinrichtungen (61) ist in der Figur 3d) zu sehen, bei der es sich um einen vergrößerten Ausschnitt der Seitenansicht aus der Figur 3a) handelt, während die Figur 3e) wiederum ein vergrößerter Ausschnitt der Figur 3c) ist.

Wie insbesondere in den Figuren 3c) und 3e) gesehen werden kann, weist eine vom Auskleidungsmodul (56) abgewandte Seitenwand (62) des Auskleidungsmoduls (57) eine Öffnung (63) auf, eine dem Auskleidungsmodul (56) zugewandte Seitenwand (64) des Auskleidungsmoduls (57) weist eine Öffnung (65) auf, eine dem Auskleidungsmodul (57) zugewandte Seitenwand (66) des Auskleidungsmoduls (56) weist eine Öffnung (67) auf, und eine vom Auskleidungsmodul (57) abgewandte Seitenwand (68) des Auskleidungsmoduls (56) weist eine Öffnung (69) auf. Alle Öffnungen (63), (65), (67) und (69) fluchten miteinander. In die Seitenwand (62) ist ein Einsatzelement (70) mit im Wesentlichen U-förmigem Querschnitt eingesetzt, das einen Boden (71), eine umfängliche Seitenwand (72) und an einem dem Boden (71) entgegengesetzten Ende der Seitenwand (72) eine umfängliche Auskragung (73) aufweist. Im Boden (71) ist eine durchgängige Bohrung (74) vorgesehen. Das Einsatzelement (70) erstreckt sich durch die Öffnung (63), wobei der Boden (71) in den Hohlraum des Auskleidungsmoduls (57) ragt und die Auskragung (73) an einer Außenfläche der Seitenwand (62) anliegt. Ein dem Einsatzelement (70) entsprechendes Einsatzelement (75) erstreckt sich durch die Öffnungen (65) und (67). Beim Einsatzelement (75) liegt dessen umfängliche Auskragung (76) jedoch an einer Innenfläche der Seitenwand (64) an und ist mit dieser fest verbunden, während dessen Boden (77) teilweise in den Hohlraum des Auskleidungsmoduls (56) ragt. Durch die Öffnung (69) schließlich erstreckt sich ein den Einsatzelementen (70) und (75) entsprechendes Einsatzelement (78), das mit seiner Auskragung an einer Außenfläche der Seitenwand (68) anliegt und mit seinem Boden in den Hohlraum des Auskleidungsmoduls (56) ragt. Durch die Bohrungen der Einsatzelemente (70), (75) und (78) sowie quer durch die Hohlräume der Auskleidungsmodule (56) und (57) erstreckt sich eine Stange (79), deren Endabschnitte jeweils ein Außengewinde aufweisen. An jedes dieser Außengewinde ist eine jeweilige Schraubenmutter (80) aufgeschraubt. Dabei ragen weder die Stange (79) noch die jeweiligen Schraubenmuttern (80) über eine Oberfläche der Einsatzelemente (70) und (78) hinaus. Infolge des sich durch die Öffnungen (65) und (67) erstreckenden Einsatzelements (75) sind die Auskleidungsmodule (56) und (57) gegen ein gegenseitiges Verschieben gesichert, während die Stange (79) und die Schraubenmuttern (80) nach deren Anziehen die Auskleidungsmodule (56) und (57) lösbar miteinander verbinden bzw. ein Lösen der Auskleidungsmodule (56) und (57) voneinander verhindern.

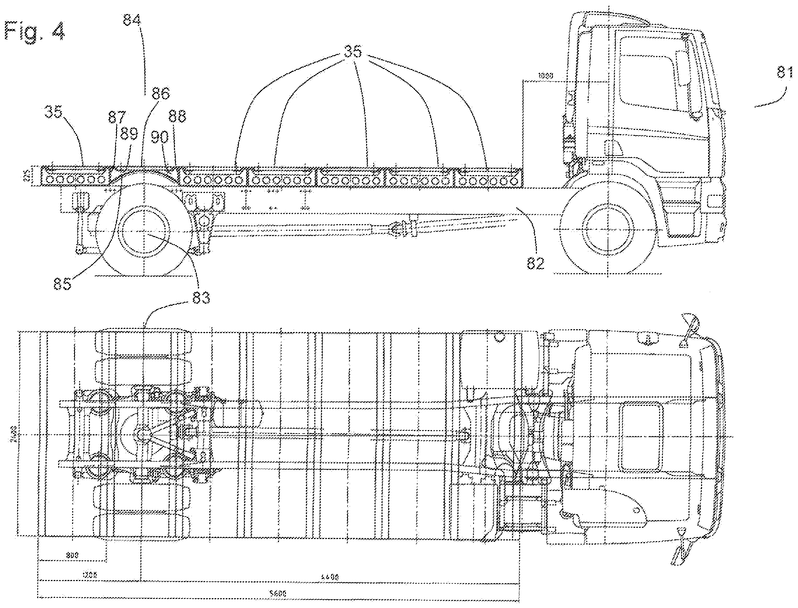

Einen Lastkraftwagen (81) mit einem Ladebereich, der unter anderem mit mehreren Auskleidungsmodulen (35) gemäß der Figur 1a) ausgekleidet oder verkleidet ist, zeigt die Figur 4 in der Seitenansicht und in der Draufsicht. Die Auskleidungsmodule (35) sind quer zu einer Längsachse des Lastkraftwagens ausgerichtet und liegen mit ihren Seitenflächen jeweils aneinander an. Mit ihren Grundelementen liegen sie an einem Rahmen (82) des Lastkraftwagens (81) auf, der den Grundelementen als Unterlage dient. Oberhalb einer Hinterradachse (83) des Lastkraftwagens (81) ist ein Auskleidungsmodul (84) mit einem kreisabschnittförmig gebogenen Grundelement (85) und einer Deckplatte (86) sowie zwei Seitenwänden (87) und (88) angeordnet. Das Grundelement (85) stößt mittig an der Deckplatte (86) an, wodurch zwei Hohlräume (89) und (90) im Auskleidungsmodul (84) gebildet werden. Der Hohlraum (89) ist dabei von einem Teil des Grundelements (85), einem Teil der Deckplatte (86) und der Seitenwand (87) umschlossen, während der Hohlraum (90) von einem Teil des Grundelements (85), einem Teil der Deckplatte (86) und der Seitenwand (88) umschlossen ist. Die fluchtenden Deckplatten aller Auskleidungsmodule (35) und (84) bilden dabei eine Ladefläche des Ladebereichs oder der Ladepritsche des Lastkraftwagens (81). Dabei können die Auskleidungsmodule (35) und (84) beispielsweise einzeln an dem Lastkraftwagen (81) montiert sein, oder einzelne oder alle der Auskleidungsmodule (35) und (84) können zu einer oder mehreren an dem Lastkraftwagen (81) montierten Verbundgruppen verbunden sein.

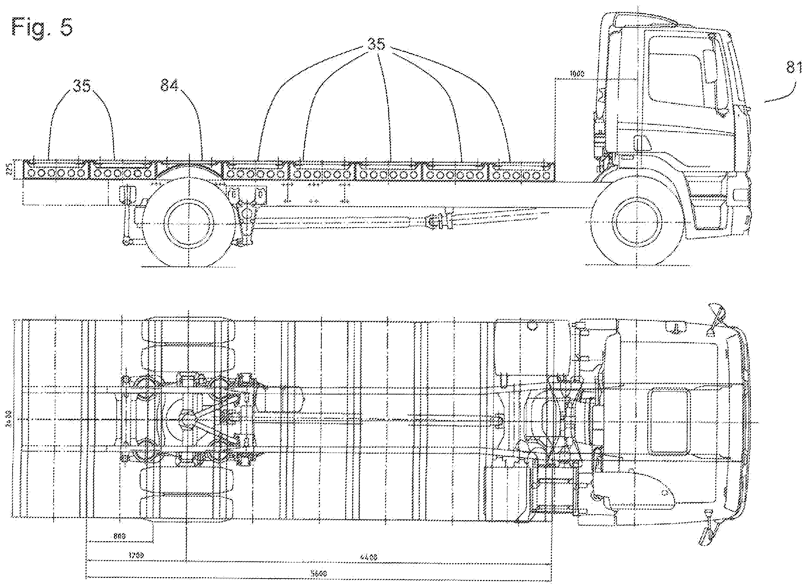

An der zur Rückseite des Lastkraftwagens (81) zugewandten Seite des Auskleidungsmoduls (84) ist in der Figur 4 nur ein weiteres Auskleidungsmodul (35) vorgesehen. Es können jedoch je nach Bedarf beliebig viele weitere Auskleidungsmodule an dieser Seite angeordnet werden. So ist in der Figur 5 der Fall gezeigt, in dem rückseitig ein zusätzliches Auskleidungsmodul (35) zur Vergrößerung der Ladefläche des Lastkraftwagens (81) vorgesehen ist.

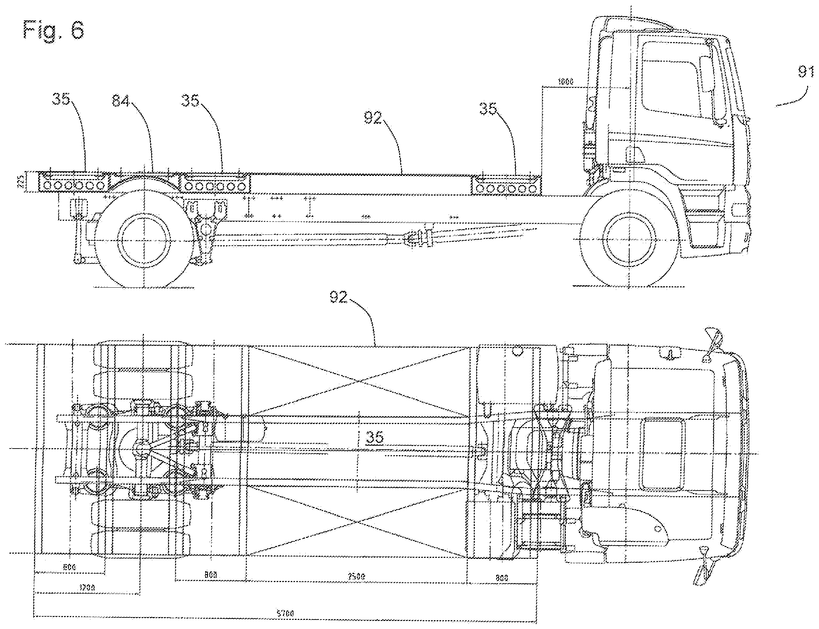

Figur 6 zeigt einen Lastkraftwagen (91), bei dem ein Teil seines Ladebereichs von einer Hubvorrichtung (92) mit in Fahrtrichtung des Lastkraftwagens (91) einer linken und einer rechten Hebebühne eingenommen ist. Zwischen den Hebebühnen ist ein Auskleidungsmodul (35) gemäß der Figur 1a) angeordnet. In Längsrichtung des Lastkraftwagens (91) ist der Ladebereich beidseitig der Hubvorrichtung (92) mit quer zur Längsachse des Lastkraftwagens (91) ausgerichteten Auskleidungsmodulen (35) gemäß der Figur 1a) und mit einem Auskleidungsmodul (84) gemäß der Figur 4 ausgekleidet.

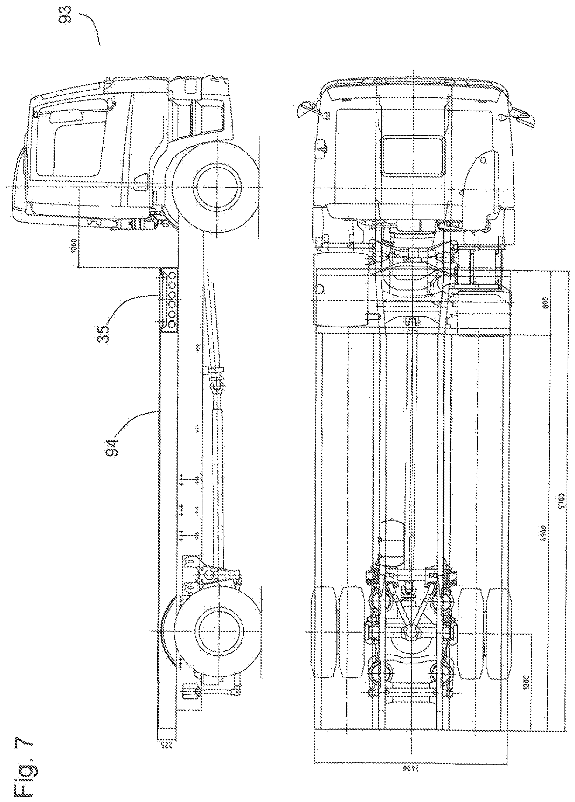

Beim in der Figur 7 gezeigten Lastkraftwagen (93) ist ein vorderer Endabschnitt des Ladebereichs mit einem quer zur Längsachse des Lastkraftwagens (93) ausgerichteten Auskleidungsmodul (35) gemäß der Figur 1a) versehen. An der der Rückseite des Lastkraftwagens (93) zugewandten Seitenwand des Auskleidungsmoduls (35) liegen drei parallel zur Längsrichtung des Lastkraftwagens (93) orientierte und seitliche aneinander anliegende Auskleidungsmodule (94) an, die sich vom Auskleidungsmodul (35) durchgängig bis zum Ende des Ladebereichs des Lastkraftwagens (93) erstrecken und deren Grundelemente jeweils einen gebogenen Abschnitt aufweisen, der oberhalb der Hinterachse des Lastkraftwagens (93) angeordnet ist.

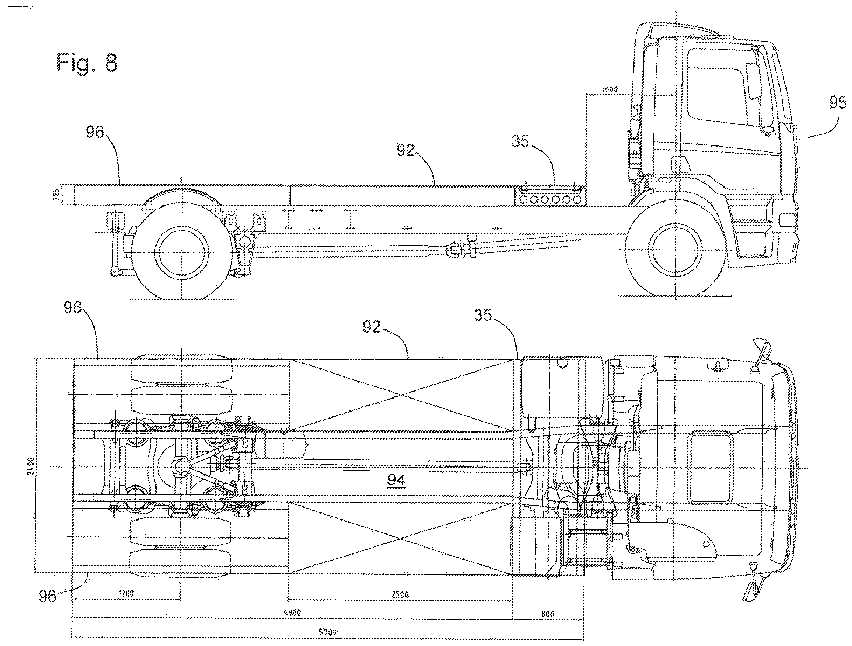

Beim Lastkraftwagen (95) der Figur 8 ist wie im vorherigen Fall der Figur 7 ein vorderer Endabschnitt des Ladebereichs mit einem quer zur Längsachse des Lastkraftwagens (95) ausgerichteten Auskleidungsmodul (35) gemäß der Figur 1a) versehen. Zur Rückseite des Lastkraftwagens (95) hin schließt sich eine Hubvorrichtung (92) gemäß der Figur 6 an das Auskleidungsmodul (35) mit in Fahrtrichtung des Lastkraftwagens (95) einer linken und einer rechten Hebebühne an. Zwischen den Hebebühnen erstreckt sich ein parallel zur Längsachse des Lastkraftwagens (95) orientiertes Auskleidungsmodul (94) gemäß der Figur 7 vom Auskleidungsmodul (35) bis ans Ende des Ladebereichs. In Fahrtrichtung des Lastkraftwagens (95) links und rechts des Auskleidungsmoduls (94) liegt beidseitig jeweils ein parallel zur Längsachse des Lastkraftwagens (95) orientiertes Auskleidungsmodul (96) mit einer Seitenfläche an dem Auskleidungsmodul (94) und mit einer Stirnfläche an der Hubvorrichtung (92) an. Die Auskleidungsmodule (96) weisen Grundelemente mit einem in Längsrichtung mittigen bogenförmigen Abschnitt auf, der oberhalb der Hinterachse des Lastkraftwagens (95) positioniert ist.

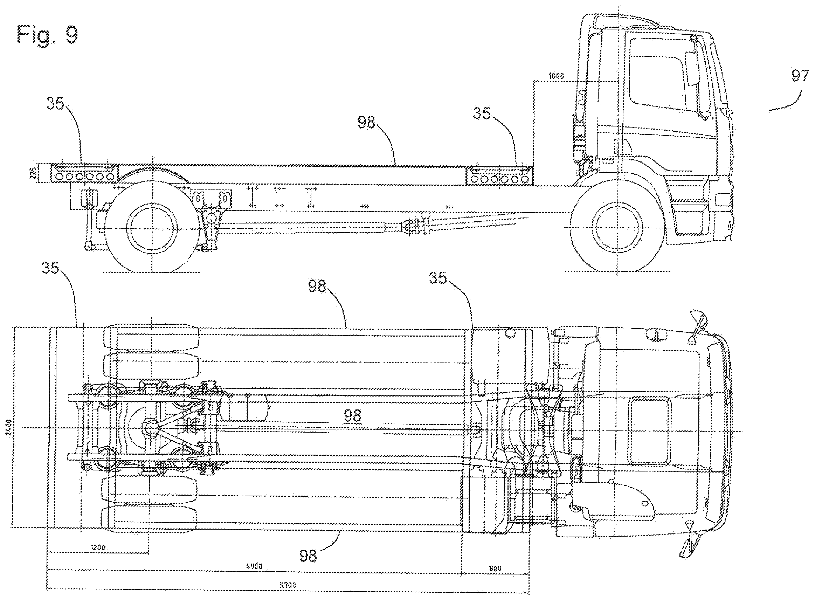

Der Lastkraftwagen (97) der Figur 9 weist an einem vorderen und einem hinteren Endabschnitt seines Ladebereichs jeweils ein quer zur Längsachse des Lastkraftwagens (97) ausgerichtetes Auskleidungsmodul (35) gemäß der Figur 1a) auf. Dazwischen erstrecken sich drei nebeneinander angeordnete und parallel zur Längsachse des Lastkraftwagens (97) ausgerichtete Auskleidungsmodule (98), deren Grundelemente jeweils in einem hinteren Endabschnitt einen bogenförmigen Abschnitt aufweisen, der oberhalb der Hinterachse des Lastkraftwagens (97) positioniert ist.

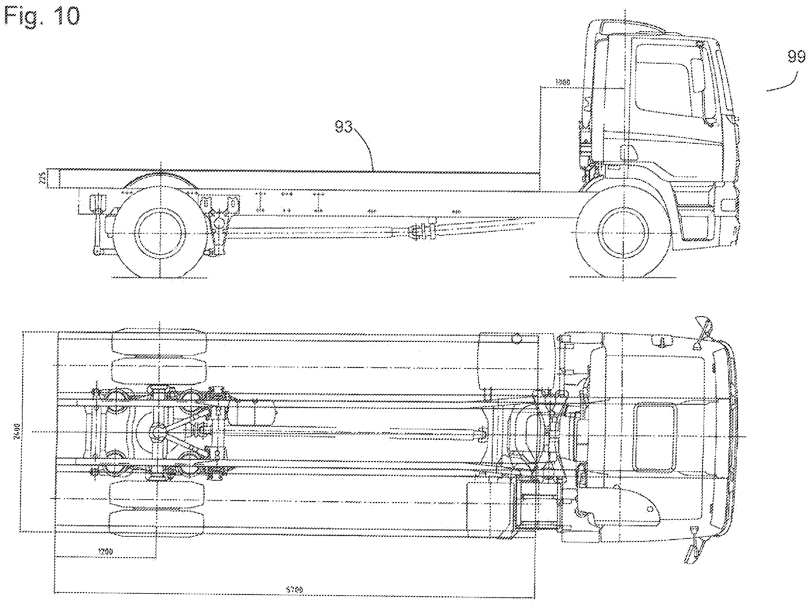

Schließlich ist beim Lastkraftwagen (99) der Figur 10 ein Ladebereich mit drei nebeneinander angeordneten und parallel zur Längsachse des Lastkraftwagens (99) ausgerichteten Auskleidungsmodulen (93) gemäß der Figur 7 ausgekleidet, die jeweils einen bogenförmigen Abschnitt aufweisen, der oberhalb der Hinterachse des Lastkraftwagens (99) positioniert ist.

## Patentansprüche

1. Kraftfahrzeug (81, 91, 93, 95, 97, 99) mit wenigstens einem Auskleidungsmodul (1, 16, 24, 35, 44, 54, 56, 57, 58, 60, 84, 94, 96, 98), das wenigstens einen Teil eines Ladebereichs oder wenigstens einen Teil einer Wandfläche des Kraftfahrzeugs (81, 91, 93, 95, 97, 99) abdeckt und das wenigstens ein Grundelement (2, 49, 85), wenigstens zwei Seitenwände (3, 4, 27, 28, 40, 41, 47, 48, 62, 64, 66, 68, 87, 88) sowie wenigstens eine Deckplatte (5, 20, 31, 42, 50, 86) umfasst, wobei das Grundelement (2, 49, 85) zum wenigstens teilweisen Anlegen des Auskleidungsmoduls (1, 16, 24, 35, 44, 54, 56, 57, 58, 60, 84, 94, 96, 98) an einer Unterlage (82) vorgesehen ist, die Seitenwände (3, 4, 27, 28, 40, 41, 47, 48, 62, 64, 66, 68, 87, 88) wenigstens an zwei entgegengesetzten Endabschnitten des Grundelements (2, 49, 85) mit diesem verbunden sind und die Deckplatte (5, 20, 31, 42, 50, 86) an dem Grundelement (2, 49, 85) abgewandten Randabschnitten (6, 7, 25, 26, 38, 39, 45, 46) der Seitenwände (3, 4, 27, 28, 40, 41, 47, 48, 62, 64, 66, 68, 87, 88) gehalten ist, wobei Grundelement (2, 49, 85), Seitenwände (3, 4, 27, 28, 40, 41, 47, 48, 62, 64, 66, 68, 87, 88) und Deckplatte (5, 20, 31, 42, 50, 86) wenigstens einen Hohlraum (13, 17, 89, 90) umschließen, **dadurch gekennzeichnet, dass** wenigstens eine Querwand (14, 18, 34, 43) im Hohlraum (13, 17, 89, 90) angeordnet ist, und dass das Grundelement (2, 49, 85) und die Seitenwände (3, 4, 27, 28, 40, 41, 47, 48, 62, 64, 66, 68, 87, 88) als einstückiges Formprofil ausgebildet sind.

2. Kraftfahrzeug (81, 91, 93, 95, 97, 99) nach Anspruch 1, wobei die Deckplatte (5, 20, 31, 42, 50, 86) an den Seitenwänden (3, 4, 27, 28, 40, 41, 47, 48, 62, 64, 66, 68, 87, 88) lösbar oder unlösbar gehalten ist.

3. Kraftfahrzeug (81, 91, 93, 95, 97, 99) nach einem der vorhergehenden Ansprüche, wobei die Deckplatte (5, 20, 31, 42, 50, 86) wenigstens eine Holzplatte und/oder wenigstens eine Siebdruckplatte und/oder wenigstens eine Metallplatte und/oder wenigstens eine Edelstahlplatte und/oder wenigstens eine Aluminiumplatte und/oder wenigstens eine Riffelplatte und/oder wenigstens ein Tränenblech ist oder umfasst und/oder wobei die Deckplatte (5, 20, 31, 42, 50, 86) wenigstens eine Ausnehmung (59) aufweist.

4. Kraftfahrzeug (81, 91, 93, 95, 97, 99) nach einem der vorhergehenden Ansprüche, wobei das Auskleidungsmodul (56, 57) wenigstens eine Verbindungseinrichtung (61) zum lösbaren oder unlösbaren Verbinden des Auskleidungsmoduls (56, 57) mit einem benachbarten Auskleidungsmodul (56, 57) oder einem benachbarten Teil eines Auskleidungsmoduls (56, 57) aufweist.

5. Kraftfahrzeug (81, 91, 93, 95, 97, 99) nach einem der vorhergehenden Ansprüche, wobei die Seitenwände in einer Längsrichtung des Auskleidungsmoduls (54) unterschiedlich oder gleich lang sind.

6. Kraftfahrzeug (81, 91, 93, 95, 97, 99) nach einem der vorhergehenden Ansprüche, wobei das Auskleidungsmodul (1, 16, 24, 35, 44, 54, 56, 57, 58, 60, 84, 94, 96, 98) ein Isoliermaterial umfasst oder mit einem Isoliermaterial ausgekleidet ist.

7. Kraftfahrzeug (81, 91, 93, 95, 97, 99) nach einem der vorhergehenden Ansprüche, wobei sich der Hohlraum (13, 17, 89, 90) des Auskleidungsmoduls (1, 16, 24, 35, 44, 54, 56, 57, 58, 60, 84, 94, 96, 98) in einer Längsrichtung des Auskleidungsmoduls (1, 16, 24, 35, 44, 54, 56, 57, 58, 60, 84, 94, 96, 98) frei durchgängig erstreckt und beidseitig offen ist.

8. Kraftfahrzeug (81, 91, 93, 95, 97, 99) nach einem der vorhergehenden Ansprüche, bei dem die Seitenwände (3, 4, 27, 28, 40, 41, 47, 48, 62, 64, 66, 68, 87, 88) des Auskleidungsmoduls (1, 16, 24, 35, 44, 54, 56, 57, 58, 60, 84, 94, 96, 98) zueinander parallel ausgerichtet sind oder bei dem die Seitenwände einen Winkel bilden.

9. Auskleidungsmodul (1, 16, 24, 35, 44, 54, 56, 57, 58, 60, 84, 94, 96, 98) zum Abdecken wenigstens eines Teils eines Ladebereichs oder einer Wandfläche eines Kraftfahrzeugs (81, 91, 93, 95, 97, 99) nach einem der Ansprüche 1 bis 8, das wenigstens ein Grundelement (2, 49, 85) das zum wenigstens teilweisen Anlegen des Auskleidungsmoduls (1, 16, 24, 35, 44, 54, 56, 57, 58, 60, 84, 94, 96, 98) an einer Unterlage (82) vorgesehen ist, wenigstens zwei an entgegengesetzten Endabschnitten des Grundelements (2, 49, 85) mit diesem verbundene Seitenwände (3, 4, 27, 28, 40, 41, 47, 48, 62, 64, 66, 68, 87, 88) sowie wenigstens eine Deckplatte (5, 20, 31, 42, 50, 86) umfasst, die an dem Grundelement (2, 49, 85) abgewandten Randabschnitten (6, 7, 25, 26, 38, 39, 45, 46) der Seitenwände (3, 4, 27, 28, 40, 41, 47, 48, 62, 64, 66, 68, 87, 88) gehalten ist, wobei Grundelement (2, 49, 85), Seitenwände (3, 4, 27, 28, 40, 41, 47, 48, 62, 64, 66, 68, 87, 88) und Deckplatte (5, 20, 31, 42, 50, 86) wenigstens einen Hohlraum (13, 17, 89, 90) umschließen.

10. Verbundgruppe (53) mit wenigstens zwei miteinander verbundenen Auskleidungsmodulen (3, 4, 27, 28, 40, 41, 47, 48, 62, 64, 66, 68, 87, 88) nach Anspruch 9.

## Claims

1. A motor vehicle (81, 91, 93, 95, 97, 99) having at least one lining module (1, 16, 24, 35, 44, 54, 56, 57, 58, 60, 84, 94, 96, 98) which covers at least one part of a loading area or at least one part of a wall surface of the motor vehicle (81, 91, 93, 95, 97, 99) and comprises at least one base element (2, 49, 85), at least two side walls (3, 4, 27, 28, 40, 41, 47, 48, 62, 64, 66, 68, 87, 88) and at least one ceiling panel (5, 20, 31, 42, 50, 86), the base element (2, 49, 85) being provided for the at least partial arrangement of the lining module (1, 16, 24, 35, 44, 54, 56, 57, 58, 60, 84, 94, 96, 98) on a support (82), the side walls (3, 4, 27, 28, 40, 41, 47, 48, 62, 64, 66, 68, 87, 88) being connected to the base element (2, 49, 85) at least at two opposite end sections of said base element (2, 49, 85), and the ceiling panel (5, 20, 31, 42, 50, 86) being held on edge sections (6, 7, 25, 26, 38, 39, 45, 46) of the side walls (3, 4, 27, 28, 40, 41, 47, 48, 62, 64, 66, 68, 87, 88), which edge sections (6, 7, 25, 26, 38, 39, 45, 46) face away from the base element (2, 49, 85), the base element (2, 49, 85), side walls (3, 4, 27, 28, 40, 41, 47, 48, 62, 64, 66, 68, 87, 88) and ceiling panel (5, 20, 31, 42, 50, 86) enclosing at least one hollow space (13, 17, 89, 90), **characterized in that** at least one transverse wall (14, 18, 34, 43) is placed in the hollow space (13, 17, 89, 90), and that the base element (2, 49, 85) and the side walls (3, 4, 27, 28, 40, 41, 47, 48, 62, 64, 66, 68, 87, 88) are configured as a single-piece shaped profile.

2. The motor vehicle (81, 91, 93, 95, 97, 99) as claimed in claim 1, the ceiling panel (5, 20, 31, 42, 50, 86) being held releasably or non-releasably on the side walls (3, 4, 27, 28, 40, 41, 47, 48, 62, 64, 66, 68, 87, 88).

3. The motor vehicle (81, 91, 93, 95, 97, 99) as claimed in one of the preceding claims, the ceiling panel (5, 20, 31, 42, 50, 86) being or comprising at least one wood panel and/or at least one film coated plywood panel and/or at least one metal panel and/or at least one stainless steel panel and/or at least one aluminum panel and/or at least one corrugated panel and/or at least one diamond plate, and/or the ceiling panel (5, 20, 31, 42, 50, 86) having at least one recess (59).

4. The motor vehicle (81, 91, 93, 95, 97, 99) as claimed in one of the preceding claims, the lining module (56, 57) having at least one connecting device (61) for the releasable or non-releasable connection of the lining module (56, 57) to an adjacent lining module (56, 57) or an adjacent part of a lining module (56, 57).

5. The motor vehicle (81, 91, 93, 95, 97, 99) as claimed in one of the preceding claims, the side walls being different or equally long in a longitudinal direction of the lining module (54).

6. The motor vehicle (81, 91, 93, 95, 97, 99) as claimed in one of the preceding claims, the lining module (1, 16, 24, 35, 44, 54, 56, 57, 58, 60, 84, 94, 96, 98) comprising an insulating material or being lined with an insulating material.

7. The motor vehicle (81, 91, 93, 95, 97, 99) as claimed in one of the preceding claims, the hollow space (13, 17, 89, 90) of the lining module (1, 16, 24, 35, 44, 54, 56, 57, 58, 60, 84, 94, 96, 98) extending in a freely continuous manner in a longitudinal direction of the lining module (1, 16, 24, 35, 44, 54, 56, 57, 58, 60, 84, 94, 96, 98) and being open on both sides.

8. The motor vehicle (81, 91, 93, 95, 97, 99) as claimed in one of the preceding claims, in which the side walls (3, 4, 27, 28, 40, 41, 47, 48, 62, 64, 66, 68, 87, 88) of the lining module (1, 16, 24, 35, 44, 54, 56, 57, 58, 60, 84, 94, 96, 98) are oriented parallel to one another, or in which the side walls form an angle.

9. A lining module (1, 16, 24, 35, 44, 54, 56, 57, 58, 60, 84, 94, 96, 98) for covering at least one part of a loading area or a wall surface of a motor vehicle (81, 91, 93, 95, 97, 99) as claimed in one of claims 1 to 8, which lining module (1, 16, 24, 35, 44, 54, 56, 57, 58, 60, 84, 94, 96, 98) comprises at least one base element (2, 49, 85) which is provided for the at least partial arrangement of the lining module (1, 16, 24, 35, 44, 54, 56, 57, 58, 60, 84, 94, 96, 98) on a support (82), at least two side walls (3, 4, 27, 28, 40, 41, 47, 48, 62, 64, 66, 68, 87, 88) which are connected to the base element (2, 49, 85) at opposite end sections of said base element (2, 49, 85) and at least one ceiling panel (5, 20, 31, 42, 50, 86) which is held on edge sections (6, 7, 25, 26, 38, 39, 45, 46) of the side walls (3, 4, 27, 28, 40, 41, 47, 48, 62, 64, 66, 68, 87, 88), which edge sections (6, 7, 25, 26, 38, 39, 45, 46) face away from the base element (2, 49, 85), the base element (2, 49, 85), side walls (3, 4, 27, 28, 40, 41, 47, 48, 62, 64, 66, 68, 87, 88) and ceiling panel (5, 20, 31, 42, 50, 86) enclosing at least one hollow space (13, 17, 89, 90).

10. A composite group (53) having at least two lining modules (3, 4, 27, 28, 40, 41, 47, 48, 62, 64, 66, 68, 87, 88) as claimed in claim 9 which are connected to one another.

## Revendications

1. Véhicule (81, 91, 93, 95, 97, 99) comprenant au moins un module de recouvrement (1, 16, 24, 35, 44, 54, 56, 57, 58, 60, 84, 94, 96, 98), qui recouvre au moins une partie d'une zone de chargement ou au moins une partie d'une face de paroi du véhicule (81, 91, 93, 95, 97, 99), et qui comprend au moins un élément de base (2, 49, 85), au moins deux parois latérales (3, 4, 27, 28, 40, 41, 47, 48, 62, 64, 66, 68, 87, 88) ainsi qu'au moins une plaque de recouvrement (5, 20, 31, 42, 50, 86), dans lequel l'élément de base (2, 49, 85) est prévu pour l'application au moins partielle du module de recouvrement (1, 16, 24, 35, 44, 54, 56, 57, 58, 60, 84, 94, 96, 98) sur un support (82), les parois latérales (3, 4, 27, 28, 40, 41, 47, 48, 62, 64, 66, 68, 87, 88) sont connectées à l'élément de base (2, 49, 85) au moins au niveau de deux parties d'extrémité opposées de celui-ci, et la plaque de recouvrement (5, 20, 31, 42, 50, 86) est maintenue sur les parties de bord (6, 7, 25, 26, 38, 39, 45, 46) des parois latérales (3, 4, 27, 28, 40, 41, 47, 48, 62, 64, 66, 68, 87, 88) situées à l'opposé de l'élément de base (2, 49, 85), dans lequel l'élément de base (2, 49, 85), les parois latérales (3, 4, 27, 28, 40, 41, 47, 48, 62, 64, 66, 68, 87, 88) et la plaque de recouvrement (5, 20, 31, 42, 50, 86) entourent au moins une cavité (13, 17, 89, 90), **caractérisé en ce qu'**au moins une paroi transversale (14, 18, 34, 43) est disposée dans la cavité (13, 17, 89, 90), et **en ce que** l'élément de base (2, 49, 85) et les parois latérales (3, 4, 27, 28, 40, 41, 47, 48, 62, 64, 66, 68, 87, 88) sont réalisés sous la forme d'un profil formé en une seule pièce.

2. Véhicule (81, 91, 93, 95, 97, 99) selon la revendication 1, dans lequel la plaque de recouvrement (5, 20, 31, 42, 50, 86) est maintenue de façon séparable ou inséparable aux parois latérales (3, 4, 27, 28, 40, 41, 47, 48, 62, 64, 66, 68, 87, 88).

3. Véhicule (81, 91, 93, 95, 97, 99), selon l'une quelconque des revendications précédentes, dans lequel la plaque de recouvrement (5, 20, 31, 42, 50, 86) est ou comprend au moins une plaque de bois et/ou au moins une plaque de sérigraphie et/ou au moins une plaque de métal et/ou au moins une plaque d'acier inoxydable et/ou au moins une plaque d'aluminium et/ou au moins une plaque ondulée et/ou au moins une tôle larmée, et/ou dans lequel la plaque de recouvrement (5, 20, 31, 42, 50, 86) comporte au moins un évidement (59).

4. Véhicule (81, 91, 93, 95, 97, 99) selon l'une quelconque des revendications précédentes, dans lequel le module de recouvrement (56, 57) présente au moins un système de liaison (61) pour la liaison séparable ou inséparable du module de recouvrement (56, 57) avec un module de recouvrement voisin (56, 57), ou avec une partie voisine d'un module de recouvrement (56, 57).

5. Véhicule (81, 91, 93, 95, 97, 99) selon l'une quelconque des revendications précédentes, dans lequel les parois latérales sont de longueur différente ou identique dans une direction longitudinale du module de recouvrement (54).

6. Véhicule (81, 91, 93, 95, 97, 99) selon l'une quelconque des revendications précédentes, dans lequel le module de recouvrement (1, 16, 24, 35, 44, 54, 56, 57, 58, 60, 84, 94, 96, 98) comprend un matériau isolant ou est revêtu avec un matériau isolant.

7. Véhicule (81, 91, 93, 95, 97, 99) selon l'une quelconque des revendications précédentes, dans lequel la cavité (13, 17, 89, 90) du module de recouvrement (1, 16, 24, 35, 44, 54, 56, 57, 58, 60, 84, 94, 96, 98) s'étend en passage libre dans une direction longitudinale du module de recouvrement (1, 16, 24, 35, 44, 54, 56, 57, 58, 60, 84, 94, 96, 98) et est ouverte sur les deux côtés.

8. Véhicule (81, 91, 93, 95, 97, 99) selon l'une quelconque des revendications précédentes, dans lequel les parois latérales (3, 4, 27, 28, 40, 41, 47, 48, 62, 64, 66, 68, 87, 88) du module de recouvrement (1, 16, 24, 35, 44, 54, 56, 57, 58, 60, 84, 94, 96, 98) sont orientées parallèlement l'une à l'autre, ou dans lequel les parois latérales forment un angle.

9. Module de recouvrement (1, 16, 24, 35, 44, 54, 56, 57, 58, 60, 84, 94, 96, 98) destiné à recouvrir au moins une partie d'une zone de chargement ou d'une face de paroi d'un véhicule (81, 91, 93, 95, 97, 99) selon l'une quelconque des revendications 1 à 8, qui comprend au moins un élément de base (2, 49, 85), qui est prévu pour la pose au moins partielle du module de recouvrement (1, 16, 24, 35, 44, 56, 57, 58, 60, 84, 94, 96, 98) sur un support (82), au moins deux parois latérales (3, 4, 27, 28, 40, 41, 47, 48, 62, 64, 66, 68, 87, 88) reliées à l'élément de base (2, 49, 85) à deux parties d'extrémité opposées de celui-ci (2, 49, 85), ainsi qu'au moins une plaque de recouvrement (5, 20, 31, 42, 50, 86), qui est maintenue à des parties de bord (6, 7, 25, 26, 38, 39, 45, 46) des parois latérales (3, 4, 27, 28, 40, 41, 47, 48, 62, 64, 66, 68, 87, 88) situées à l'opposé de l'élément de base (2, 49, 85), dans lequel l'élément de base (2, 49, 85), les parois latérales (3, 4, 27, 28, 40, 41, 47, 48, 62, 64, 66, 68, 87, 88) et la plaque de recouvrement (5, 20, 31, 42, 50, 86) entourent au moins une cavité (13, 17, 89, 90).

10. Ensemble de liaison (53) comprenant au moins deux modules de recouvrement (3, 4, 27, 28, 40, 41, 47, 48, 62, 64, 66, 68, 87, 88) selon la revendication 9 reliés l'un à l'autre.
